# EUROPEAN PATENT APPLICATION

(11) **EP 4 772 772 A1**
(43) Date of publication of application: **08.07.2026**
(21) Application number: 24859601.7
(22) Date of filing: 22.08.2024
(51) Int. Cl.: F16J 15/18, B63H 23/36, F16J 15/3276

(54) **SHAFT SEALING DEVICE**

(30) Priority: 01.09.2023 JP 2023142066
(71) Applicant: Eagle Industry Co., Ltd., Minato-ku Tokyo 105-8587 (JP)
(72) Inventor: ARAI Yusuke, Tokyo 105-8587 (JP); KOBAYASHI Masaaki, Tokyo 105-8587 (JP)
(74) Representative: Patentquadrat Patentanwaltsgesellschaft mbH
(86) International application number: PCT/JP2024/029821
(87) International publication number: WO 2025/047568

(57) **Abstract**

To provide a shaft sealing device having high followability of a case with respect to a rotating shaft.

A shaft sealing device 1 includes: a tube 2 through which a rotating shaft 3 extends; a case 4 having an elastic portion 40 which has elasticity and through which the rotating shaft 3 extends; a rubber hose 7 externally fitted across the case 4; a fastening member 8 configured to fasten the rubber hose 7 to the case 4; and a seal device 5, 6 configured to seal between the rotating shaft 3 and the case 4. The case 4 is disposed axially outward of an end of the tube 2 in an axial direction, and a rigid member 41 having higher hardness than the elastic portion 40 is installed on a radially inner side of the fastening member 8 and axially outward of the end of the tube 2 in the axial direction.

## Description

### {TECHNICAL FIELD}

The present invention relates to a shaft sealing device, for example, a shaft sealing device that seals a rotating shaft extending through a tube.

### {BACKGROUND ART}

Known shaft sealing devices that prevent leakage of sealed fluids around a rotating shaft in rotating machines include, for example, a mechanical seal including a pair of annular sliding parts that rotate relative to each other and whose sliding surfaces slide against each other, and a seal ring that rotates and slides relative to a sliding surface of a rotating shaft or a case.

For example, a shaft sealing device suitable for a propulsion device of a ship as described in Patent Citation 1 mainly includes a seal ring, a seal casing, a mating ring, a rubber tube, and a plurality of bands. The seal ring is attached to a propeller shaft extending through a stern tube. The seal casing is externally fitted onto the propeller shaft. The mating ring is fixed to the seal casing and is slidable relative to the seal ring. The rubber tube is externally fitted across the seal casing and the stern tube, and is fastened and fixed to the seal casing and the stern tube by the bands.

Even if the propeller shaft becomes eccentric or tilts due to engine vibration, water resistance, or the like, the rubber tube elastically deforms, so that the seal casing can follow the propeller shaft. Accordingly, the shaft sealing device described in Patent Citation 1 makes it easier to maintain a sliding contact state between the seal casing and the mating ring.

### {CITATION LIST}

### {Patent Literature}

Patent Citation 1: JP 2005-214293 A (Pages 6 and 7, FIG. 1)

### {SUMMARY OF INVENTION}

### {Technical Problem}

In the shaft sealing device as described in Patent Citation 1, the inner peripheral surface of the seal casing is brought into sliding contact with the propeller shaft, allowing the seal casing to follow the eccentricity and tilt of the propeller shaft. Therefore, it was necessary to satisfy the sliding properties of the propeller shaft and the seal casing while preventing deterioration such as wear.

The present invention has been made in view of such problems, and an object of the present invention is to provide a shaft sealing device with high followability of a case with respect to a rotating shaft.

### {Solution to Problem}

In order to solve the foregoing problems, a shaft sealing device according to the present invention includes: a tube through which a rotating shaft extends; a case having an elastic portion which has elasticity and through which the rotating shaft extends; a rubber hose configured to connect the tube and the case; a fastening member configured to fasten the rubber hose to the case; and a seal device configured to seal between the case and the rotating shaft, wherein at least a part of the case is disposed axially outward of an end of the tube in an axial direction; and a rigid member having a higher hardness than the elastic portion of the case is installed on a radially inner side of the fastening member and axially outward of the end of the tube in the axial direction. According to the aforesaid feature of the present invention, the force of the fastening member for fixing the rubber hose acts on the rigid member, so that the case is less likely to deform toward the rotating shaft, and a gap between the case and the rotating shaft can be secured. Accordingly, an elastic member can be used as a material of the case, thereby improving the followability of the case with respect to the rotating shaft.

It may be preferable that the rigid member is formed in an endless tubular shape. According to this preferable configuration, the force of the fastening member can be prevented from acting on the elastic member.

It may be preferable that the rigid member is provided on an outer periphery of the elastic portion of the case. According to this preferable configuration, the rigid member may be easily assembled to the elastic member.

It may be preferable that the rigid member is bonded to the outer periphery of the elastic portion of the case. According to this preferable configuration, the elastic member can be prevented from coming off the rigid member.

It may be preferable that the elastic portion of the case includes a hose installation portion that overlaps the rubber hose in a radial direction and a seal portion in which the seal device is provided, and the rigid member extends across the hose installation portion in the axial direction. According to this preferable configuration, the seal portion can be swung relative to the hose installation portion without any deformation in shape of the hose installation portion.

It may be preferable that the case is brought into contact with the tube in the axial direction. According to this preferable configuration, the axial dimension of the shaft sealing device can be shortened while the followability of the case with respect to the rotating shaft can be improved.

### {BRIEF DESCRIPTION OF DRAWINGS}

FIG. 1 is a sectional view of a shaft sealing device according to a first embodiment of the present invention.
FIG. 2 is a view of the main portion of the shaft sealing device when viewed in the axial direction in the first embodiment.
FIG. 3 is a view of the main portion of a shaft sealing device according to a second embodiment of the present invention when viewed in the axial direction.
FIG. 4 is a perspective view of the main portion of the shaft sealing device in the second embodiment.

### {DESCRIPTION OF EMBODIMENTS}

Modes for implementing a shaft sealing device according to the present invention will be described below based on embodiments.

### {First embodiment}

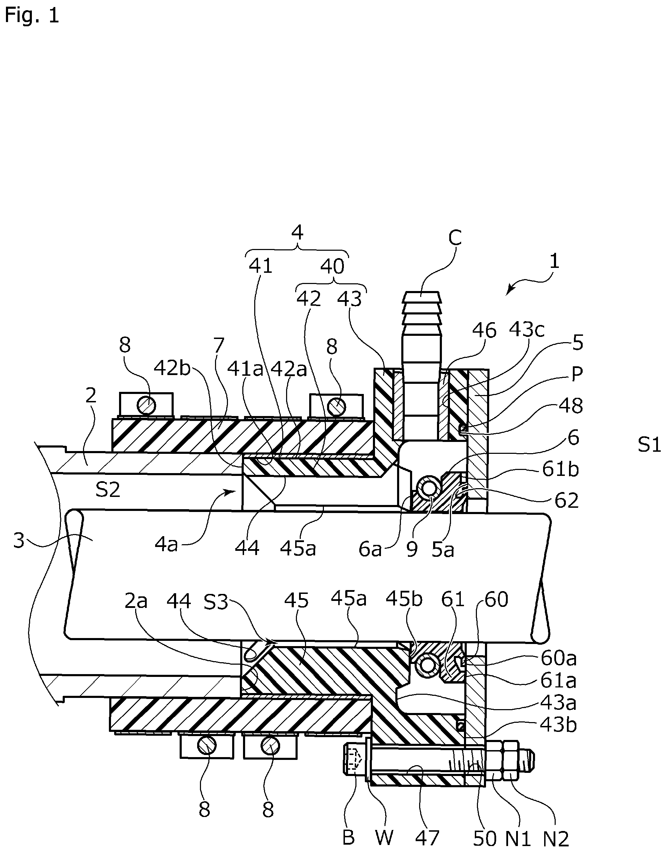

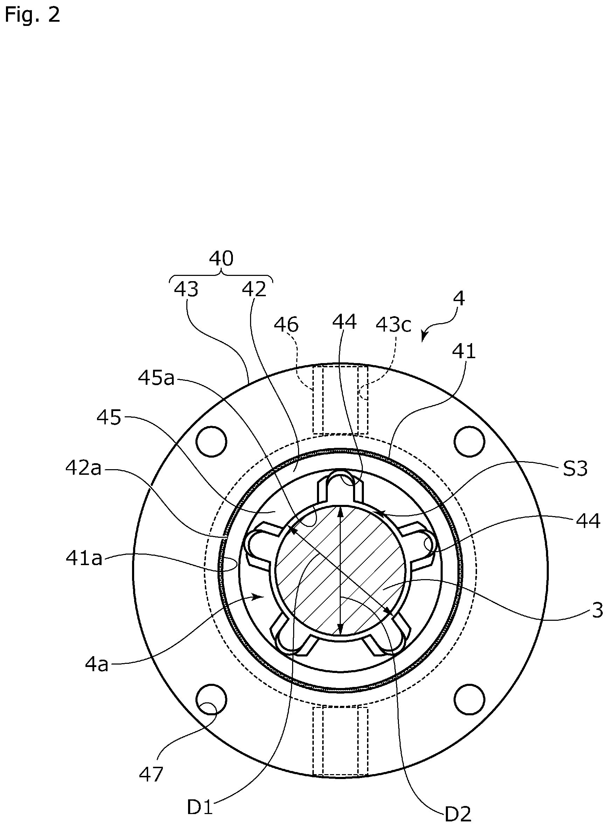

A shaft sealing device according to a first embodiment of the present invention will be described with reference to FIGS. 1 and 2. Hereinafter, the description will be made based on the assumption that the left side of the drawing sheet of FIG. 1 is a left side and the right side of the drawing sheet of FIG. 1 is a right side.

As illustrated in FIG. 1, a shaft sealing device 1 is a water-lubricated stern tube shaft sealing device suitable for a ship interior side of a propulsion device in a ship. The shaft sealing device 1 seals a rotating shaft 3 extending through a stern tube 2 to prevent cooling water within the stern tube as a sealed-fluid-side space S2 from leaking into a leakage-side space S1 on the ship interior side. Incidentally, the shaft sealing device 1 may be applied to not only ships but also rotating machines of automobiles, general industrial machinery, or the like. In addition, the cooling fluid is not limited to cooling water such as fresh water or seawater, but may be oil, or may be changed as appropriate.

A propeller for propulsion is attached to the end of the rotating shaft 3 on a ship exterior side, namely, the left end (not illustrated) thereof in an axial direction, and a stern tube bearing (not illustrated) that supports the rotating shaft 3 is disposed in the vicinity of the propeller.

The shaft sealing device 1 mainly includes a case 4, a mating ring 5, a seal ring 6, a rubber hose 7, and a plurality of hose bands 8 as fastening members. A seal device of the present embodiment is composed of the mating ring 5 and the seal ring 6.

As illustrated in FIGS. 1 and 2, the case 4 is configured in a flanged cylindrical shape with a through-hole 4a formed therethrough in the axial direction, and includes a base material 40 as an elastic portion and a tubular member 41 as a rigid member. Incidentally, in FIG. 2, the tubular member 41 is given a dot pattern for ease of identification.

The base material 40 is made of isoprene rubber with a hardness of 95 (incidentally, hardness according to Shore A) and is integrally formed in a flanged cylindrical shape including a hose installation portion 42 extending in the axial direction and a seal portion 43 extending from the right end of the hose installation portion 42 in the axial direction toward a radially outer side. Since the base material 40 is made of isoprene rubber with a hardness of 95 (hardness according to Shore A), it has good processing accuracy. Incidentally, the base material 40 is not limited to being made of isoprene rubber and may be made of any elastically deformable material, and may be changed as appropriate, but preferably, has a higher hardness than the rubber hose 7.

The through-hole 4a is formed in the base material 40, and the center axis of the through-hole 4a substantially coincides with the center axis of the hose installation portion 42 and the seal portion 43.

The hose installation portion 42 is formed in a cylindrical shape, and its outer peripheral surface 42a is substantially flush and extends in a circumferential and axial directions. The hose installation portion 42 is internally fitted into the tubular member 41, and the outer peripheral surface 42a of the hose installation portion 42 and an inner peripheral surface 41a of the tubular member 41 are bonded to each other.

The tubular member 41 is made of stainless steel and is formed in a cylindrical shape. Incidentally, the tubular member 41 is not limited to being made of stainless steel, and may be made of other metals or resins as long as it has a higher hardness than the base material 40 and is less likely to elastically deform when fastened with the hose bands 8 described later, and the material may be changed as appropriate.

The axial dimension of the tubular member 41 is substantially the same as the axial dimension of the hose installation portion 42. Namely, the tubular member 41 extends across the hose installation portion 42 in the axial direction.

The right end surface of the tubular member 41 in the axial direction is in contact with the left end surface of a wall portion 43a described later of the seal portion 43 in the axial direction. The left end surface of the tubular member 41 in the axial direction is substantially flush with a left end surface 42b of the hose installation portion 42 in the axial direction.

Returning to the description of the hose installation portion 42, five water passing grooves 44 extending in the axial direction are equiangularly arranged on the radially inner side of the hose installation portion 42 (see FIG. 2). The water passing grooves 44 are recessed from inner peripheral surface 45a in the hose installation portion 42 toward the radially outer side and are open toward the radially inner side. In addition, the water passing grooves 44 extend through the hose installation portion 42 in the axial direction. Incidentally, the number and arrangement of the water passing grooves 44 may be changed as appropriate.

In addition, protruded portions 45 having the inner peripheral surface 45a are provided between adjacent water passing grooves 44 in the circumferential direction, and are thick in a radial direction. An inner diameter D1 of the inner peripheral surface 45a is formed to be larger in the order of millimeters than a diameter D2 of the rotating shaft 3. In addition, a portion of the case 4 with the smallest inner diameter constitutes the inner peripheral surface 45a.

Accordingly, when the case 4 is externally fitted onto the rotating shaft 3 and is connected to the stern tube 2, the inner peripheral surface 45a is spaced apart from the rotating shaft 3 over the entire circumference to form a gap S3 therebetween. Incidentally, the gap S3 is exaggerated in FIGS. 1 and 2 for ease of identification.

In addition, the protruded portions 45 extend continuously from the left side to the right side in the axial direction, and right ends 45b thereof in the axial direction protrude toward the right side in the axial direction from the wall portion 43a of the seal portion 43 (see FIG. 1).

The seal portion 43 has a disk-shaped wall portion 43a extending toward the radially outer side from the right end of the hose installation portion 42 in the axial direction, and a tubular portion 43b extending toward the right side in the axial direction from the radially outer end of the wall portion 43a. The seal portion 43 is formed in a stepped cylindrical shape with a larger diameter than the hose installation portion 42. A socket 46 is fixed to an installation hole 43c extending through the tubular portion 43b in the radial direction. A connector C (see FIG. 1) of a pipe (not illustrated) for supplying cooling water as the sealed fluid is connected to the socket 46.

Incidentally, FIG. 2 illustrates the configuration in which two sets of the installation holes 43c and the sockets 46 are equiangularly arranged; however, the present invention is not limited thereto, and the number and arrangement thereof may be changed as appropriate. In addition, the installation hole may extend through the wall portion 43a in the axial direction. Namely, it is only necessary that cooling water can be introduced into the space S2.

As illustrated in FIG. 1, the mating ring 5 is an annular stainless steel plate material that is externally fitted over the rotating shaft 3. In addition, the left end surface thereof in the axial direction has an end portion on the radially inner side that is a sliding surface 5a on which sliding surfaces 60a, 61a of the seal ring 6 slide. Incidentally, the mating ring 5 is not limited to being made of stainless steel.

The male threaded portions of bolts B, which extend through washers W, are inserted into a plurality of axial through-holes 50 equiangularly arranged on the radially outer side and a plurality of axial through-holes 47 equiangularly arranged in the seal portion 43 of the case 4, and double nuts N1, N2 are screwed onto the bolts B, so that the mating ring 5 is attached to the case 4.

In addition, between the case 4 and the mating ring 5, an O-ring P is disposed in an annular groove 48 recessed toward the left side in the axial direction from the right end surface of the seal portion 43 of the case 4 in the axial direction, thereby preventing the cooling water introduced through the socket 46 from leaking to the ship interior side.

The seal ring 6 is disposed on the radially inner side of the seal portion 43. The seal ring 6 is tightened onto the rotating shaft 3 by a garter spring 9 externally fitted thereto.

The seal ring 6 is made of nitrile rubber and is formed in an annular shape. The seal ring 6 is provided with a thin lip 60 that curves and extends obliquely toward the radially outward direction, and a support leg 61 that is thicker than the lip 60 and is located on the radially outer side of the lip 60. The right end surface of the lip 60 in the axial direction is the sliding surface 60a, and the right end surface of the support leg 61 in the axial direction is the sliding surface 61a. Incidentally, the seal ring 6 is not limited to being made of nitrile rubber.

In the assembled state of the shaft sealing device 1 with the double nuts N1, N2 screwed, the left end 6a of the seal ring 6 in the axial direction is brought into contact with the right ends 45b of the protruded portions 45 in the case 4 in the axial direction, and the sliding surfaces 60a, 61a of the seal ring 6 are brought into surface contact with the sliding surface 5a of the mating ring 5 so as to be relatively slidable. Incidentally, in the assembled state of the shaft sealing device 1, the left end 6a of the seal ring 6 in the axial direction and the right ends 45b of the protruded portions 45 in the case 4 in the axial direction may be slightly spaced apart from each other.

The rubber hose 7 is made of chloroprene rubber with a hardness of 60 (incidentally, hardness according to Shore A) and is formed in a cylindrical shape. Namely, it is made of rubber with a lower hardness than the base material 40.

The rubber hose 7 is externally fitted across the right end portion of the stern tube 2 in the axial direction and the tubular member 41 of the case 4, and the hose bands 8 externally fitted over the rubber hose 7 are fastened to connect the stern tube 2 and the case 4. Namely, the hose installation portion 42 of the case 4 overlaps the rubber hose 7 in the radial direction. Incidentally, in the present embodiment, two hose bands 8 are respectively used on the side of the stern tube 2 and on the side of the case 4, but the number and arrangement of the hose bands 8 may be changed as appropriate.

The tubular member 41 is disposed on the radially inner side of the hose band 8 on the side of the case 4. The tubular member 41 is an endless tubular, so that the force of the hose bands 8 for securing the rubber hose 7 can be prevented from acting on the base material 40. Accordingly, the gap S3 can be stably secured. Incidentally, the gap S3 can be secured more reliably compared to the structure to which the rigid member that is not an endless tubular is applied, as in a second embodiment described later.

In addition, when the stern tube 2 and the case 4 are connected by the rubber hose 7, the left end surface 42b of the hose installation portion 42 in the axial direction and the right end surface 2a in the axial direction of the right end portion of the stern tube 2 in the axial direction are disposed opposite to and in contact with each other in the axial direction, namely, are disposed to be butted against each other. In other words, the case 4 and the tubular member 41 are disposed axially outward of the right end portion of the stern tube 2 in the axial direction.

In addition, the rubber hose 7 is fastened by the hose bands 8 to be pressed against the tubular member 41. Accordingly, the space between the tubular member 41 and the rubber hose 7, and the space between the stern tube 2 and the rubber hose 7 are sealed, respectively.

Next, the sealing function of the shaft sealing device 1 will be described.

First, the normal state when the rotating shaft 3 is not eccentric or tiled will be described. Referring to FIG. 1, cooling water delivered by a pump (not illustrated) is introduced into the through-hole 4a of the case 4 through the connector C and the socket 46, and is then discharged to the ship exterior through the gap S3 and the water passing grooves 44. Accordingly, the rotating shaft 3, the stern tube bearing (not illustrated), the mating ring 5, and the seal ring 6 can be cooled while the sliding surfaces thereof can be lubricated.

In addition, part of the cooling water passes through a communication groove 61b extending through the support leg 61 of the seal ring 6 in the radial direction, and flows in and out of an annular groove 62 defined by the lip 60 and the support leg 61.

The lip 60 is pressed toward the mating ring 5 by the pressure of the cooling water within the annular groove 62, so that the sliding surface 60a of the lip 60 and the sliding surface 5a of the mating ring 5 are kept in close contact with each other.

In the normal state, the gap S3 is formed between the rotating shaft 3 and the case 4 across the circumferential direction, and the rotating shaft 3 is in a non-contact state with the inner peripheral surface 45a of the case 4 over the entire circumference. Accordingly, the case 4 is less likely to be deteriorated due to sliding heat generation and wear.

In addition, since the case 4 is connected to the stern tube 2 via the rubber hose 7, vibrations of the stern tube 2 are less likely to be transmitted to the case 4. Accordingly, the case 4 is prevented from largely moving in the radial direction relative to the rotating shaft 3 due to vibrations of the stern tube 2.

In addition, the left end surface 42b of the rubber base material 40 in the axial direction is brought into contact with the right end surface 2a of the stern tube 2 in the axial direction. Accordingly, when cooling water flows into the stern tube 2 through the through-hole 4a and the water passing grooves 44, the cooling water or contaminants are prevented from entering between the rubber hose 7 and the stern tube 2, or between the rubber hose 7 and the tubular member 41, and an unintended force is prevented from being generated in the rubber hose 7.

The rotating shaft 3, which has become slightly eccentric or tilted relative to the center axis of the case 4 due to vibration, wear of the stern tube bearing, or the like, is less likely to come into contact with the inner peripheral surface 45a in the case 4 due to the gap S3.

The sliding surface 60a of the seal ring 6 has a radial region that can be brought into sliding contact with the sliding surface 5a of the mating ring 5 and is equal to or larger than the gap S3. Accordingly, when the rotating shaft 3 is eccentric within the gap S3, the sliding surface 60a of the lip 60 and the sliding surface 5a of the mating ring 5 are kept in close contact with each other.

In addition, when the rotating shaft 3 moves relative to the case 4 toward the left in the axial direction, the left end 6a of the seal ring 6 in the axial direction can be brought into contact with the right ends 45b of the protruded portions 45 in the axial direction in the case 4 to prevent the seal ring 6 from moving excessively to the left in the axial direction, so that the sliding surface 60a of the lip 60 and the sliding surface 5a of the mating ring 5 can be maintained in close contact with each other.

In addition, when the rotating shaft 3 moves relative to the case 4 toward the right in the axial direction, the highly rigid support leg 61 mainly receives the force, and the lip 60 of the seal ring 6 is likely to deform toward the annular groove 62, so that the sliding surface 60a of the lip 60 and the sliding surface 5a of the mating ring 5 can be maintained in close contact with each other.

In addition, when the rotating shaft 3 tilts, a part of the seal ring 6 is pressed against the right ends 45b in the axial direction, and the other part of the seal ring 6 located on the opposite side in the radial and axial directions is pressed against the sliding surface 5a. Accordingly, the wall portion 43a of the seal portion 43 mainly elastically deforms, causing the mating ring 5 to follow the tilting of the seal ring 6 and maintaining a close contact state with each other.

In more detail, the hose installation portion 42 onto which the tubular member 41 is externally fitted is less likely to deform in shape such that its own axis is bent or curved, so that the case 4 is likely to elastically deform with the wall portion 43a of the seal portion 43 extending in the radially outward direction from the hose installation portion 42 acting as a base point.

In addition, since the wall portion 43a is in contact with the highly rigid tubular member 41, the case 4 is more likely to elastically deform with the tubular member 41 acting as a base point. Further, the rubber hose 7 is made of rubber that has lower hardness than the base material 40, allowing elastic deformation the wall portion 43a.

Meanwhile, the endless tubular member 41 that extends continuously across the axial direction thereof is externally fitted over the hose installation portion 42, so that the seal portion 43 is likely to elastically deform. Incidentally, this is particularly noticeable compared to the structure in which the rigid members are divided in the circumferential direction as in the second embodiment described later, the structure in which the rigid members are divided in the axial direction, the structure in which the rigid member does not extend continuously across the hose installation portion in the axial direction, or the like.

In addition, the rubber hose 7 is prevented from deforming in shape such that the center axis of the portion into which the stern tube 2 and the tubular member 41 are internally fitted is bent or curved. Further, when a strong force acts on the rubber hose 7 with the space between the left end surface 42b in the axial direction and the right end surface 2a in the axial direction acting as a base point, the tubular portion 43b can be tilted slightly relative to the stern tube 2, making it less likely to break.

In addition, when the rotating shaft 3 becomes eccentric or tilts to the extent that it comes into contact with the inner peripheral surface 45a in the case 4, the protruded portions 45 having the inner peripheral surface 45a in contact with the rotating shaft 3 elastically deform in response to the eccentricity or tilt of the rotating shaft 3, making both the hose installation portion 42 and the rotating shaft 3 less likely to be damaged.

In addition, the protruded portions 45 are formed in a protruded shape with the water passing grooves 44 interposed therebetween, and therefore is likely to elastically deform in the circumferential direction. Accordingly, the protruded portions 45 are likely to buffer the impact when the rotating shaft 3 comes into contact.

In addition, the load acting on the case 4 due to the tilting of the rotating shaft 3 and the transmission of the rotational force of the rotating shaft 3 are buffered by the rubber base material 40, which is integrally formed, so that both the case 4 and the rotating shaft 3 are less likely to break.

In addition, since the hose installation portion 42 is bonded to the tubular member 41, even if a rotational force of the rotating shaft 3 in contact with the hose installation portion 42 acts, torsional deformation of the entire hose installation portion 42 relative to the tubular member 41, and rotation of the base material 40 relative to the tubular member 41 in the circumferential direction are prevented. Accordingly, the base material 40 is less likely to come off the tubular member 41.

In addition, even if the rotating shaft 3 comes into contact with the inner peripheral surface 45a in the hose installation portion 42, the cooling water can pass through the water passing grooves 44. Accordingly, the hose installation portion 42 and the rotating shaft 3 can be cooled.

As described above, the shaft sealing device 1 of the present embodiment employs the case 4 made of an elastic member to improve the followability with respect to the rotating shaft 3 while ensuring the sufficient gap S3 between the case 4 and the rotating shaft 3.

The shaft sealing device 1 of the present embodiment can be manufactured easily since the gap S3 can be ensured. It can be manufactured much more easily compared to, for example, the configuration described in Patent Citation 1, which requires adjustment of the gap between the inner peripheral surface of the seal casing and the propeller shaft in the order of microns.

In addition, since the left end surface 42b of the base material 40 in the axial direction is in contact with the right end surface 2a of the stern tube 2 in the axial direction, the axial length of the shaft sealing device 1 can be shortened.

In addition, since the left end surface 42b of the base material 40 in the axial direction is in contact with the right end surface 2a of the stern tube 2 in the axial direction, the case 4 is prevented from tilting relative to the center axis of the stern tube 2 due to its own weight.

In addition, the shaft sealing device 1 of the present embodiment is easily assembled since the tubular member 41 is provided on the outer periphery of the hose installation portion 42. It is assembled more easily compared to, for example, the configuration in which the rigid member is provided on the inner periphery of the hose installation portion or the configuration in which the rigid member is embedded in the hose installation portion by molding or the like.

Additionally, in the shaft sealing device 1 of the present embodiment, since the tubular member 41 is provided on the outer periphery of the hose installation portion 42, even if the rotating shaft 3 comes into contact with the hose installation portion 42 due to eccentricity or vibration, both the rotating shaft 3 and the hose installation portion 42 are less likely to be damaged.

Further, in the shaft sealing device 1 of the present embodiment, since the tubular member 41 is provided on the outer periphery of the hose installation portion 42, the outer diameter of the hose installation portion 42 can be made smaller while securing the thickness of the protruded portions 45 in the radial direction, compared to the configuration in which the rigid member is embedded in the hose installation portion by molding or the like.

Incidentally, the rigid member may be configured to be provided on the inner periphery of the hose installation portion, or may be configured to be embedded in the hose installation portion by molding or the like. Even with these configurations, while the gap with the rotating shaft is secured, the seal portion and the rubber hose can elastically deform, thereby improving the followability of the case with respect to eccentricity and tilting of the rotating shaft.

Incidentally, the method of fixing the rigid member and the elastic portion may be changed as appropriate, such as by embedding the rigid member in the hose installation portion by molding or the like, by press-fitting the hose installation portion into the tubular member, or by fitting the tubular member and the hose installation portion together with a recess and a projection.

### {Second embodiment}

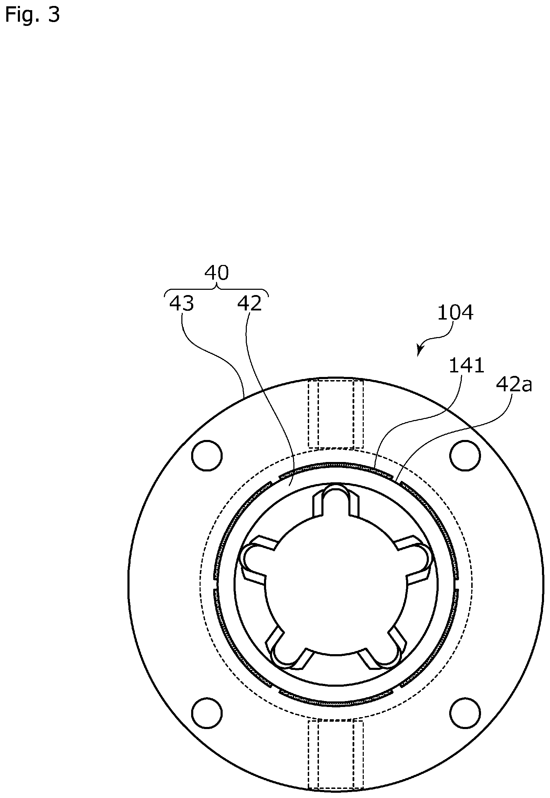

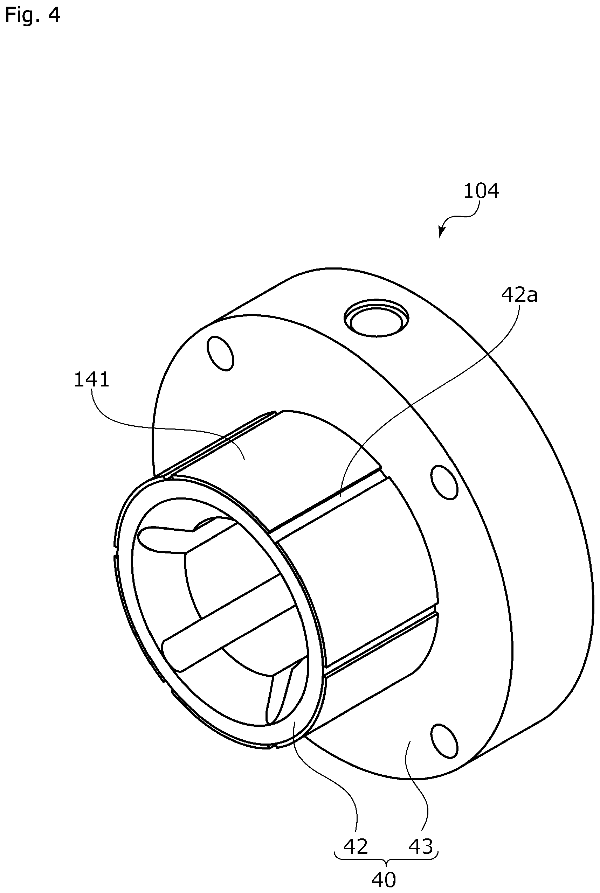

Next, a shaft sealing device according to a second embodiment of the present invention will be described with reference to FIGS. 3 and 4. Incidentally, the description of configurations that are the same as and overlap with the configurations of the first embodiment will be omitted.

The case 104 of the second embodiment includes the base material 40 and six plate materials 141 as rigid members. The plate materials 141 are arc-shaped when viewed in the axial direction and extend in the axial direction. The six plate materials 141 are equiangularly arranged and spaced apart from one another in the circumferential direction. In addition, the plate materials 141 are bonded to the outer peripheral surface 42a of the hose installation portion 42.

The six plate materials 141 can prevent the hose installation portion 42 from excessively elastically deforming when the rubber hose 7 is fastened with the hose bands 8. Accordingly, the shape and arrangement of the rigid members may be changed as appropriate as long as elastic deformation of the hose installation portion 42 can be prevented.

For example, the rigid members may be divided in the axial direction, namely, may have a plurality of rigid members that are short in the axial direction and tubular, or may be divided in the circumferential direction and in the axial direction, and the direction of division may be changed as appropriate. In addition, the axial dimension of the rigid members may be shorter than the axial dimension of the hose installation portion, and the rigid members may be disposed only on the radially inner side of the hose bands 8.

In addition, when the rigid members are divided in the circumferential direction as in the plate materials 141 of the present embodiment, high accuracy needed to internally fit the hose installation portion 42 into the tubular member 41 without any gaps as in the first embodiment is not necessary and therefore assembly is simplified.

In addition, as in the present embodiment, as long as the rigid members are divided in the circumferential direction, the rigid members may be bonded to the inner peripheral surface or the outer peripheral surface of the rubber hose, or the rigid members may be embedded in the rubber hose by molding or the like. Even with this configuration, while the rubber hose is connected to the case by fastening the rubber hose with a fastening member, the hose installation portion of the elastic portion in the case can be prevented from excessively elastically deforming. Accordingly, the configuration of the case may not include the rigid members.

The embodiments of the present invention have been described above with reference to the drawings; however, the specific configurations are not limited to the embodiments, and changes or additions that are made without departing from the scope of the present invention are included in the present invention.

For example, in the first and second embodiments, the seal device is described as being the mating ring and the seal ring, however, the present invention is not limited thereto. The seal ring fixed to the case may be configured to slide against the rotating shaft to provide a seal, and the seal device may be changed as appropriate.

In addition, in the first and second embodiments, the seal ring is described as being separate from the case; however, the present invention is not limited thereto. The case may also serve as the seal ring, for example, a part of the case may be a lip that is brought into sliding contact with the rotating shaft.

In addition, in the first and second embodiments, the minimum inner diameter of the hose installation portion is described as being larger than the diameter of the rotating shaft in the order of millimeters; however, the present invention is not limited thereto, and the minimum inner diameter may be larger in the order of centimeters or may be changed as appropriate.

In addition, in the first and second embodiments, the case and the stern tube are described as being in contact with each other in the axial direction; however, the present invention is not limited thereto and they may be spaced apart from each other in the axial direction. In this configuration, the rubber hose can greatly deform in shape with the space between the case and the stern tube acting as a base point.

### {REFERENCE SIGNS LIST}

- 1: Shaft sealing device
- 2: Stern tube (tube)
- 3: Rotating shaft
- 4: Case
- 4a: Through-hole
- 5: Mating ring (seal device)
- 6: Seal ring (seal device)
- 7: Rubber hose
- 8: Hose band (fastening member)
- 40: Base material (elastic portion)
- 41: Tubular member (rigid member)
- 42: Hose installation portion
- 43: Seal portion
- 45a: Inner peripheral surface
- 104: Case
- 141: Plate material (rigid member)
- S1: Leakage-side space
- S2: Sealed-fluid-side space
- S3: Gap

## Claims

1. A shaft sealing device, comprising:
a tube through which a rotating shaft extends;
a case having an elastic portion which has elasticity and through which the rotating shaft extends;
a rubber hose configured to connect the tube and the case;
a fastening member configured to fasten the rubber hose to the case; and
a seal device configured to seal between the case and the rotating shaft, wherein
at least a part of the case is disposed axially outward of an end of the tube in an axial direction; and
a rigid member having a higher hardness than the elastic portion of the case is installed on a radially inner side of the fastening member and axially outward of the end of the tube in the axial direction.

2. The shaft sealing device according to claim 1, wherein
the rigid member is formed in an endless tubular shape.

3. The shaft sealing device according to claim 1, wherein
the rigid member is provided on an outer periphery of the elastic portion of the case.

4. The shaft sealing device according to claim 3, wherein
the rigid member is bonded to the outer periphery of the elastic portion of the case.

5. The shaft sealing device according to any one of claims 1 to 4, wherein
the elastic portion of the case comprises a hose installation portion that overlaps the rubber hose in a radial direction and a seal portion in which the seal device is provided, and the rigid member extends across the hose installation portion in the axial direction.

6. The shaft sealing device according to claim 1, wherein
the case is brought into contact with the tube in the axial direction.
